# EUROPÄISCHE PATENTANMELDUNG

(11) **EP 2 777 906 A1**
(43) Veröffentlichungstag der Anmeldung: **17.09.2014**
(21) Anmeldenummer: 14157874.0
(22) Anmeldetag: 05.03.2014
(51) Int. Cl.: B29C 33/12, B29C 33/18, B29C 45/14

(54) **Spritzgussform für einen Fahrradgriff, Verfahren zur Herstellung eines Fahrradgriffs sowie Fahrradgriff**

(30) Priorität: 15.03.2013 DE 102013204564
(71) Anmelder: RTI Sports Vertrieb von Sportartikeln GmbH, 56070 Koblenz (DE)
(72) Erfinder: Arnold, Franc, 56068 Koblenz (DE)
(74) Vertreter: Von Kreisler Selting Werner - Partnerschaft von Patentanwälten und Rechtsanwälten mbB

(57) **Zusammenfassung**

Ein Fahrradgriff weist mindestens ein Oberflächenelement (20, 22), beispielsweise aus Leder auf. Die Oberflächenelemente (20, 22) sind jeweils von einer Nut (26) umgeben. Zur Herstellung des Fahrradgriffs mit der entsprechenden Nut (26) weist eine Spritzgussform zwei Formteile (38, 40) auf, die ein stegförmiges Halteelement (44) aufweisen. Das stegförmige Halteelement (44) umgibt jeweils einen Einlegebereich (42) für die Oberflächenelemente (20, 22).

## Beschreibung

Die Erfindung betrifft eine Spritzgussform für einen Fahrradgriff, ein Verfahren zur Herstellung eines Fahrradgriffs sowie einen Fahrradgriff.

Bei Fahrradgriffen ist es bekannt, dass diese eine insbesondere klemmend mit dem Fahrradlenker verbindbare Hülse aus härterem Kunststoff aufweisen, die von einem weicheren Kunststoff umgeben ist. Hierdurch ist es möglich, einerseits über die Hülse aus härterem Kunststoff eine feste Verbindung zwischen dem Fahrradgriff und dem Fahrradlenker zu realisieren und anderseits einen weichere Dämpfungseigenschaften aufweisenden Kunststoff vorzusehen. Dies ist insbesondere bei Fahrradgriffen, die ein Abstützelement für den Handballen aufweisen, vorteilhaft. Einerseits ist eine weiche Handballenauflage realisiert und andererseits können die durch eine flügelförmige, einen Abstand zum Fahrradlenker aufweisende Handballenauflage auf den Fahrradgriff wirkenden Momente auf den Fahrradlenker über die aus härterem Kunststoff hergestellte Hülse übertragen werden. Dies ist erforderlich, um ein Verdrehen des Fahrradgriffs auf den Lenker zu vermeiden. Vorteilhaft ist eine derartige Ausgestaltung des Fahrradgriffs mit einer härteren, auf dem Lenker klemmend befestigbaren Hülse auch beim Verbinden des Fahrradgriffs mit einem Haltehorn, da somit ein Verdrehen des Haltehorns gegebenenfalls zusammen mit dem Fahrradgriff auf dem Lenker vermieden ist. Insbesondere ist eine Kombination eines Fahrradgriffs mit einem Haltehorn und einem Abstützelement für den Handteller bei einem derartigen Aufbau aus einem harten und einem weicheren Kunststoff vorteilhaft. Derartige Fahrradgriffe sind beispielsweise in EP 1 712 460, EP 1 537 014 und EP 1 919 762 beschrieben.

Der die Hülse umgebende weichere Kunststoff muss die Anforderung erfüllen, dass einerseits eine gute Verbindung mit der Hülse und andererseits die geforderten Dämpfungseigenschaften realisiert sind. Ferner soll der weichere Kunststoff eine geforderte Haptik sowie Rutschfestigkeit und dergleichen aufweisen.

Aufgabe der Erfindung ist es, einen Fahrradgriff zu schaffen, bei dem die Eigenschaften der äußeren Schicht des Griffmaterials gewählt werden können. Ferner ist es Aufgabe der Erfindung eine entsprechende Spritzgussform sowie ein Verfahren zur Herstellung eines derartigen Fahrradgriffs zu schaffen.

Die Lösung der Aufgabe erfolgt durch eine Spritzgussform gemäß Anspruch 1, ein Herstellungsverfahren gemäß Anspruch 7 sowie einen Fahrradgriff gemäß Anspruch 10.

Wesentliches Element der Erfindung ist es, dass der Fahrradgriff ein Oberflächenelement aufweist, das aus einem flächigen Material wie insbesondere Leder, Kunstleder, Filz, Gewebe und dergleichen hergestellt ist. Ein entsprechendes Oberflächenelement ist in dem Fahrradgriff entsprechend eines Einlegeelements angeordnet und an dem Fahrradgriff fixiert. Durch Vorsehen eines insbesondere aus Leder hergestellten Oberflächenelements kann das Design sowie die Haptik und die Dämpfungseigenschaften des Fahrradgriffs verändert werden.

Eine erfindungsgemäße Spritzgussform zur Herstellung eines derartigen Fahrradgriffs weist ein oberes und einen unteres Formteil auf. Die beiden Formteile werden zur Herstellung des Fahrradgriffs verschlossen, um sodann das Kunststoffmaterial, bei dem es sich üblicherweise um ein Elastomer wie TPU handelt, einzuspritzen. Um in einem der beiden Formteile, d.h. in einer späteren Oberseite oder Unterseite des Fahrradgriffs ein Oberflächenelement vorsehen zu können, weist zumindest eines der beiden Formteile einen Einlegebereich auf, in den das Oberflächenelement wie beispielsweise das zugeschnittene Lederstück eingelegt werden kann. Bevorzugt wird dabei das Oberflächenelement in einem überwiegenden Teil vom Einlegebereich unterstützt. Insbesondere berührt das Oberflächenelement den Einlegebereich in einem überwiegenden Anteil. Besonders bevorzugt wird das Oberflächenelement durch den Einlegebereich vollflächig unterstützt durch eine vollflächige Berührung des Oberflächenelements und des Einlegebereichs. Hierdurch wird eine ebene Oberfläche des Oberflächenelements an dessen späteren Oberseite erreicht. Insbesondere erfolgt das Einlegen des Oberflächenelements in den Einlegebereich bei geöffneter Spritzgussform. Zur Fixierung des Oberflächenelements in dem Einlegebereich weist dieser mindestens ein am Rand des Einlegebereichs vorgesehenes Halteelement zum Fixieren des Oberflächenelements in dem Formteil auf. Durch das beispielsweise als Pins oder Ansätze ausgebildete Halteelement erfolgt ein insbesondere klemmendes Fixieren des Oberflächenelements in dem Einlegebereich.

Vorzugsweise sind mehrere Einlegebereiche vorgesehen, wobei insbesondere je Formteil ein Einlegebereich vorgesehen ist. Bei der bevorzugten Ausführungsform eines Einlegebereichs je Formteil sind diese derart angeordnet, dass sich die beiden Oberflächenelemente bei dem hergestellten Fahrradgriff einander gegenüberliegen, insbesondere an einer Oberseite und einer Unterseite des Fahrradgriffs angeordnet sind. Des Weiteren ist es bevorzugt, dass die Oberflächenelemente eine Größe aufweisen, die zusammen einen Großteil der Oberfläche des Fahrradgriffs abdecken. Insbesondere sind mehr als 90% und besonders bevorzugt mehr als 95% der Oberfläche des Fahrradgriffs durch das Oberflächenelement ausgebildet.

In einer besonders bevorzugten Ausführungsform der Erfindung ist das Halteelement, durch das das Oberflächenelement in einem der beiden Formteile gehalten wird, stegförmig ausgebildet. Vorzugsweise bildet das stegförmige Halteelement den Rand des Einlegebereichs aus. Das stegförmige Halteelement ist hierbei in besonders bevorzugter Ausführungsform in sich geschlossen, so dass das stegförmige Halteelement den Einlegebereich bzw. das in den Einlegebereich eingelegte Oberflächenelement vollständig umgibt. Jedoch ist insbesondere auch ein den Einlegebereich teilweise umgebendes stegförmiges Halteelement geeignet das eingelegte Oberflächenelement sicher zu fixieren. Hierdurch ist zunächst ein sicheres Fixieren des Oberflächenelements in dem Formteil realisiert. Ein den Einlegebereich und somit das Oberflächenelement vollständig umgebendes stegförmiges Halteelement weist ferner den Vorteil auf, dass hierdurch verhindert ist, dass das in die Spritzgussform eingespritzte Kunststoffmaterial an die Oberseite des Oberflächenelements gelangt. Es ist somit verhindert, dass während des Spritzgießens Kunststoffmaterial zwischen die Spritzgussform und das Oberflächenelement gelangt und sich somit nach der Fertigstellung des Fahrradgriffs an der Oberseite des Oberflächenelements befindet.

Der Rand des Einlegebereichs, der insbesondere durch das in sich geschlossene, stegförmige Halteelement ausgebildet ist, ist vorzugsweise in einem, im Wesentlichen konstanten Abstand zu einer den Griffrand ausbildenden Formteilwand angeordnet. Bei dem hergestellten Fahrradgriff ist somit ein Abstand zwischen dem Griffrand und dem Oberflächenelement im Wesentlichen konstant.

Zumindest eines der beiden Formteile weist in einer bevorzugten Weiterbildung eine nutförmige Vertiefung auf, die das insbesondere stegförmige Halteelement bzw. den Rand des Einlegebereichs insbesondere vollständig umgibt. In diese Vertiefung gelangt beim Spritzgießen Kunststoffmaterial, so dass bei dem fertigen Fahrradgriff das Oberflächenelement vollständig von einem Wulst oder Rand an Kunststoffmaterial umgeben ist, wobei zwischen diesem und dem Oberflächenelement, insbesondere eine Nut oder Einkerbung ausgebildet ist, die durch das stegförmige Halteelement hervorgerufen ist.

Des Weiteren ist es bevorzugt, dass der mindestens eine Einlegebereich, der in dem oberen und/ oder unteren Formteil angeordnet ist einen Abstand von weniger als 8 mm zum Griffrand aufweist. Insbesondere ist ein konstanter Abstand bevorzugt. Vorzugsweise liegt der Abstand im Bereich von 5 bis 3 mm. Hierdurch ist im Wesentlichen ein Einlegebereich über eine gesamte Innenfläche eines der beiden Formteile, insbesondere beim Vorsehen von zwei einander gegenüberliegenden Einlegebereiche bei beiden Formteilen realisiert.

Sofern der mit dem Spritzgussverfahren hergestellte Fahrradgriff eine Innenhülse mit oder ohne skelettartigem Ansatz, wie beispielsweise in EP 1 712 460 beschrieben, aufweist, ist es ferner bevorzugt, dass die beiden Formteile Hülsenaufnahmen aufweisen, in dem die Hülse eingelegt wird.

Ferner betrifft die Erfindung ein Verfahren zur Herstellung eines Fahrradgriffs, wobei das erfindungsgemäße Verfahren in besonders bevorzugter Ausführungsform mit der vorstehend beschriebenen Spritzgussform durchgeführt wird. Zunächst erfolgt ein Einlegen des mindestens einen Oberflächenelements in den mindestens einen Einlegebereich, in ein Formteil der Spritzgussform, wobei die Spritzgussform vorzugsweise zwei Formteile aufweist. Nach dem Einlegen des mindestens einen Oberflächenelements in eines oder beide Formteile erfolgt ein Schließen der Spritzgussform und anschließend ein Einspritzen von Spritzgussmaterial, bei dem es sich insbesondere um ein Elastomer wie TPU handelt. Vor dem Schließen können selbstverständlich mehrere unterschiedlich ausgestaltete Oberflächenelemente in unterschiedliche Einlegebereiche eingelegt werden. Hierbei können die Oberflächenelemente in ihrer Form und/ oder ihrem Material unterschiedlich ausgebildet sein. Es ist beispielsweise möglich, dass an einer Oberseite eines Fahrradgriffs ein Einlegeelement aus anderem Material und/ oder anderen Materialeigenschaften vorhanden ist als an der Unterseite des Fahrradgriffs.

Sofern der Fahrradgriff ein Versteifungselement wie eine Hülse mit skelettartigem, flügelförmigem Ansatz, wie insbesondere in EP 1 712 460 beschrieben, aufweist, kann dieses Versteifungselement ebenfalls vor dem Verschließen der Spritzgussform in diese eingelegt werden. Danach erfolgt das Einspritzen des Spritzgussmaterials, so dass dieses insbesondere zwischen dem hülsenförmigen Versteifungselement und dem Oberflächenelement eingespritzt wird und eine feste Verbindung sicherstellt. Ferner gelangt ein Teil des eingespritzten Spritzgussmaterials in einen Bereich der bei dem fertigen Fahrradgriff sichtbar ist. Hierbei handelt es sich insbesondere um einen Steg oder ein Materialbereich, der bei dem fertigen Fahrradgriff das Oberflächenelement bzw. die Oberflächenelemente gegebenenfalls in einem Abstand umgibt.

Des Weiteren betrifft die Erfindung einen Fahrradgriff, der vorzugsweise mit Hilfe des vorstehend beschriebenen Verfahrens und insbesondere zusätzlich unter Verwendung der vorstehend beschriebenen Spritzgussform hergestellt ist.

Der Fahrradgriff weist zumindest ein Oberflächenelement auf, das zumindest einen Teil der Griffoberfläche ausbildet. Bevorzugt ist es, wie bereits vorstehend anhand der Spritzgussform und des Verfahrens beschrieben, dass insbesondere zwei, vorzugsweise einander gegenüberliegende Oberflächenelemente vorgesehen sind, die im Wesentlichen die gesamte Oberfläche des Fahrradgriffs ausbilden. Erfindungsgemäß ist das mindestens eine Oberflächenelement von einer Nut umgeben. Diese ist insbesondere durch das stegförmige Halteelement, das in der Spritzgussform ausgebildet ist, hervorgerufen. Vorzugsweise ist bei mehreren Oberflächenelementen jedes einzelne Oberflächenelement von einer gesonderten Nut umgeben. Bevorzugt umgibt dabei die Nut das Oberflächenelement nur teilweise, insbesondere, falls das stegförmige Halteelement, das in der Spritzgussform ausgebildet ist, nur teilweise den Einlegebereich umgibt. Besonders bevorzugt ist es jedoch, dass die Nut das Oberflächenelement vollständig umgibt.

Des Weiteren ist es bevorzugt, dass zwischen benachbarten Oberflächenelementen ein Trennsteg aus dem Kunststoffspritzgussmaterial vorgesehen ist. Besonders bevorzugt ist es, dass bei einem Fahrradgriff, der zwei, insbesondere einander gegenüberliegende Oberflächenelemente aufweist, bei montiertem Fahrradgriff zwei derartige Trennstege vorgesehen sind, die sich insbesondere in derselben Horizontalebene befinden.

Bei einer besonders bevorzugten Ausführungsform ist das mindestens eine Oberflächenelement, insbesondere alle Oberflächenelemente jeweils von einem Steg aus Kunststoffspritzgussmaterial umgeben, wobei zwischen diesem Steg und dem Oberflächenelement eine das Oberflächenelement ebenfalls vollständig umgebende Nut vorgesehen ist. Trotz der Nut, die insbesondere durch das stegförmige Halteelement der Spritzgussform hervorgerufen ist, ist durch den Steg aus Kunststoffmaterial ein Schutz der Seitenflächen des Oberflächenelements realisiert. Insbesondere steht weder die Oberseite des mindestens einen Oberflächenelements noch der Stege vor, so dass diese eine insbesondere geschlossene Oberfläche bzw. in einer gekrümmten Fläche liegen ausbilden.

Nachfolgend wird die Erfindung anhand einer bevorzugten Ausführungsform näher erläutert.

Es zeigen:
- Figur 1: eine schematische Draufsicht eines erfindungsgemäß hergestellten Fahrradgriffs,
- Figur 2: eine schematische Seitenansicht des in Figur 1 dargestellten Fahrradgriffs in Richtung des Pfeils II,
- Figur 3: eine schematische Draufsicht einer innerhalb des Fahrradgriffs angeordneten Hülse,
- Figur 4: eine schematische Draufsicht auf die beiden Formteile einer Spritzgussform zur Herstellung des in Figur 1 dargestellten Fahrradgriffs und
- Figur 5: eine schematische Querschnittansicht durch die geschlossene Spritzgussform.

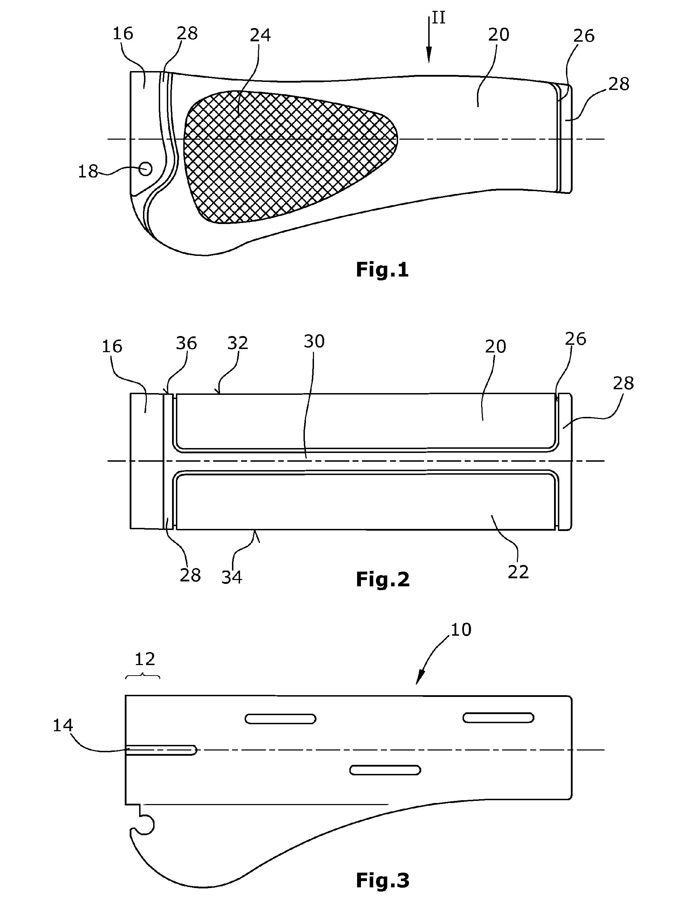

Ein Fahrradgriff weist eine innerhalb des Fahrradgriffs angeordnete Hülse 10 (Figur 3) auf. Die Hülse 10 weist einen Klemmbereich 12 auf, um die Hülse und damit den mit der Hülse verbundenen gesamten Fahrradgriff mit einem Lenker klemmend zu befestigen. Hierzu weist die Hülse im Klemmbereich einen Hülsenschlitz 14 auf. Die Klemmung erfolgt mit Hilfe eines schellenartigen Klemmmittels 16 (Figur 1) mit Hilfe einer schematisch dargestellten Schraube 18. Der Fahrradgriff weist zwei einander gegenüberliegend angeordnete Oberflächenelemente 22 auf, bei denen es sich insbesondere um Lederelemente handelt. Das in montiertem Zustand obere Oberflächenelement 20 weist einen strukturierten, beispielsweise durch Lasern hergestellten Oberflächenbereich 24 auf, durch den die Rauigkeit verbessert und somit ein Abrutschen von dem Fahrradgriff vermieden ist. Das insbesondere aus Leder hergestellte Oberflächenelement ist von einer Nut 26 umgeben. Die Nut 26 umgibt die im dargestellten Ausführungsbeispiel zwei Oberflächenelemente 20, 22 jeweils gesondert und vollständig. Alternativ hierzu wäre eine Nut möglich, die mindestens ein Oberflächenelement nur teilweise umgibt.

In Figur 1 seitlich links und rechts neben der Nut 26 ist jeweils ein stegförmiger Bereich 28 vorgesehen. Dieser besteht aus dem in die Spritzgussform eingespritzten Kunststoffmaterial. Der Steg 28 geht in einen Trennsteg 30 (Figur 2) über, wobei der Trennsteg 30 zwischen den beiden Oberflächenelementen 20, 22 in Längsrichtung des Griffs verläuft. Bei montiertem Griff verläuft der Trennsteg 30 in einer horizontalen Ebene, wobei dem Trennsteg 30 gegenüberliegend ein weiterer Trennsteg angeordnet ist.

Die Oberflächen 32, 34 der beiden Oberflächenelemente 20, 22 gehen mit Ausnahme der Nut 26 stufenfrei in die Oberfläche 36 der Stege 28 bzw. der Trennstege 30 über.

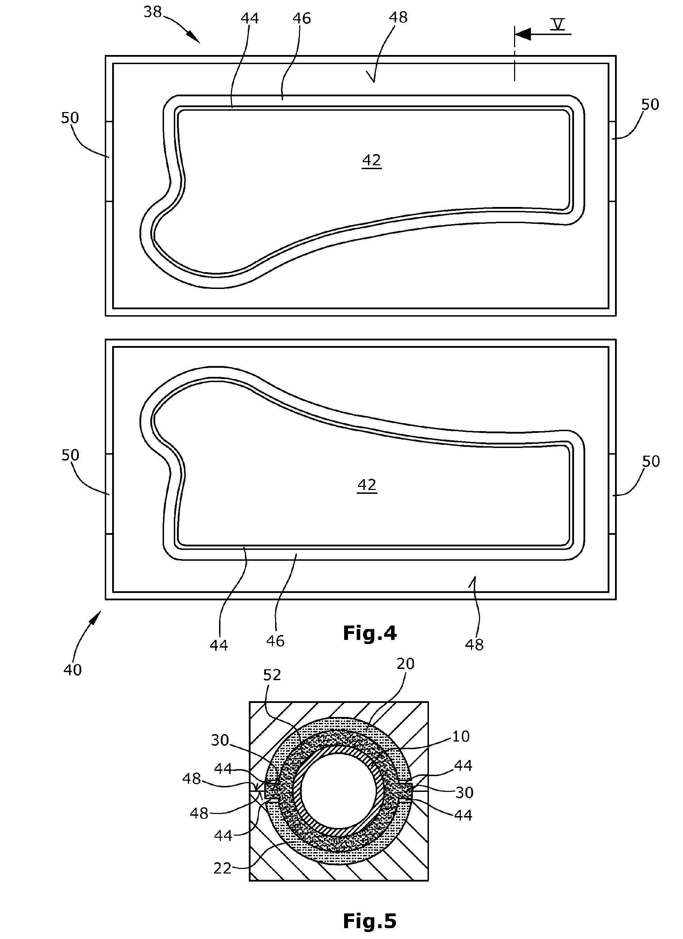

Zur Herstellung des Fahrradgriffs sind zwei im Wesentlichen spiegelsymmetrisch aufgebaute Formteile 38, 40 (Figur 4) vorgesehen. Die Formteile 38, 40 weisen jeweils eine Vertiefung auf, so dass jedes Formteil 38, 40 eine die Hälfte des späteren Fahrradgriffs ausbildende Vertiefung bildet. Jedes Formteile 38, 40 weist einen Einlegebereich 42 auf. Der Einlegebereich 42 ist jeweils vollständig im Randbereich von einem stegförmigen Halteelement 44 umgeben. An den stegförmigen Haltebereich schließt sich nach außen eine nutförmige Vertiefung 46 an, die das stegförmige Halteteil 44 ebenfalls vollständig umgibt und im Wesentlichen eine konstante Breite aufweist. Die sich hieran anschließende Fläche 48 ist planar, wobei die beiden Flächen 48 bei geschlossener Spritzgussform (Figur 5) aneinander anliegen.

Zur Herstellung des erfindungsgemäßen Fahrradgriffs werden die beiden, insbesondere aus Leder hergestellten und exakt zugeschnittenen Oberflächenelemente in die beiden Einlegebereiche 42 in die offene Spritzgussform eingelegt, wobei im dargestellten Ausführungsbeispiel die Oberflächenelemente vollflächig am Einlegebereich anliegen. Durch die Stege 44 werden die eingelegten Oberflächenelemente gehalten. Dies setzt eine gewisse Steifigkeit der Oberflächenelemente und ein exaktes Zuschneiden der Oberflächenelemente voraus.

Im nächsten Schritt wird die Hülse 10 (Figur 3) in entsprechende Hülsenaufnahmen 50, die jeweils als Halbzylinder ausgebildet sind, eingelegt.

Danach wird die Spritzgussform durch Aufeinanderlegen der beiden Formteile 38, 40 geschlossen und Kunststoffmaterial in die Spritzgussform eingespritzt.

Die Figur 5 stellt eine Schnittansicht der geschlossenen Spritzgussform etwa auf Höhe der Linie V in Figur 4 dar.

Die die Einlegebereiche 42 umgebenden Stege 44 ragen nach innen, wobei jeweils in den beiden Einlegebereichen 42 die beiden Oberflächenelemente 20, 22 eingelegt sind. Ferner ist im Schnitt die Hülse 10 im inneren Bereich dargestellt. Zwischen der Hülse 10 und den beiden Oberflächenelementen 20, 22 wird Kunststoffmaterial in die geschlossene Spritzgussform eingespritzt. Das Kunststoffmaterial bildet sowohl eine Zwischenschicht 52 zwischen der Hülse 10 und den Oberflächenelementen 20, 22 als auch die Stege 36, 26 sowie die beiden einander gegenüberliegenden Trennstege 30 aus.

## Patentansprüche

1. Spritzgussform für einen Fahrradgriff, mit
einem oberen und einem unteren Formteil (38, 40),
einem in zumindest einem der beiden Formteile (38, 40) vorgesehenen Einlegebereich (42) zum Einlegen eines Oberflächenelements (20, 22) des Fahrradgriffs bei geöffneter Spritzgussform und
mindestens ein am Rand des Einlegebereichs vorgesehenen Halteelement (44) zum Fixieren des mindestens einen Oberflächenelements (20, 22) in dem Formteil (38, 40).

2. Spritzgussform nach Anspruch 1, **dadurch gekennzeichnet, dass** mehrere Einlegebereiche (42), insbesondere je Formteil (38, 40) ein Einlegebereich (42) vorgesehen ist.

3. Spritzgussform nach Anspruch 1 oder 2, **dadurch gekennzeichnet, dass** das Halteelement (44) stegförmig ausgebildet ist und vorzugsweise den Einlegebereich (42) vollständig umgibt.

4. Spritzgussform nach einem der Ansprüche 2 bis 3, **dadurch gekennzeichnet, dass** sich der mindestens eine Einlegebereich (42) im Wesentlichen über eine gesamte Innenfläche des Formteils (38, 40) erstreckt.

5. Spritzgussform nach einem der Ansprüche 1 bis 4, **dadurch gekennzeichnet, dass** der Rand des mindestens einen Einlegebereichs (42) im Wesentlichen parallel zu einer den Griffrand ausbildenden Formteilwand verläuft.

6. Spritzgussform nach einem der Ansprüche 1 bis 5, **dadurch gekennzeichnet, dass** zumindest eines der beiden Formteile (38, 40) eine nutförmige das stegförmige Halteelement (44), insbesondere vollständig umgebende Vertiefung (46) aufweist.

7. Verfahren zur Herstellung eines Fahrradgriffs, insbesondere mit einer Spritzgussform nach einem der Ansprüche 1 bis 6, mit den Schritten:
Einlegen eines Oberflächenelements (20, 22) in einen Einlegebereich (42) eines Formteils (38, 40) der Spritzgussform,
Schließen der Spritzgussform und
Einspritzen von Spritzgussmaterial.

8. Verfahren nach Anspruch 7, mit dem zusätzlichen Schritt:
Einlegen mindestens eines weiteren Oberflächenelements (20, 22), insbesondere in ein zweites Formteil (38, 40).

9. Verfahren nach einem der Ansprüche 7 oder 8, mit dem zusätzlichen Schritt:
Einlegen eines insbesondere aus Kunststoff hergestellten Versteifungselements (10).

10. Fahrradgriff, der insbesondere nach dem Verfahren gemäß einem der Ansprüche 7 bis 9 und insbesondere unter Verwendung der Spritzgussform nach einem der Ansprüche 1 bis 6 hergestellt ist, mit
mindestens einem, zumindest einen Teil der Griffoberfläche ausbildenden Oberflächenelement (20, 22) und
einer das Oberflächenelement (20, 22) umgebenden Nut (26).

11. Fahrradgriff nach Anspruch 10, **dadurch gekennzeichnet, dass** bei mehreren vorgesehenen Oberflächenelementen (20, 22) jedes von einer gesonderten Nut (26) umgeben ist.

12. Fahrradgriff nach Anspruch 10 oder 11, **dadurch gekennzeichnet, dass** zwischen benachbarten Oberflächenelementen (20, 22) ein Trennsteg (30) aus Kunststoffspritzgussmaterial vorgesehen ist.

13. Fahrradgriff nach einem der Ansprüche 10 bis 12, **dadurch gekennzeichnet, dass** das mindestens eine Oberflächenelement (20, 22), insbesondere alle Oberflächenelemente (20, 22) von einem Steg (28, 30) aus Kunststoffspritzgussmaterial umgeben ist.
